Europäisches Patentamt

European Patent Office

Office européen des brevets

(19)

(11) Publication number: **0 159 158**
**A1**

(12) # EUROPEAN PATENT APPLICATION

(21) Application number: 85302216.8

(22) Date of filing: 29.03.85

(51) Int. Cl.⁴: **H 04 N 1/32**
**H 04 N 1/00**

(30) Priority: 30.03.84 GB 8408320

(43) Date of publication of application:
23.10.85 Bulletin 85/43

(84) Designated Contracting States:
BE DE FR GB IT NL

(71) Applicant: INTERNATIONAL COMPUTERS LIMITED
ICL House
Putney, London, SW15 1SW(GB)

(72) Inventor: Wilmot, Robert William
The White House Shiplake
Henley-on-Thames Oxfordshire(GB)

(74) Representative: Loughrey, Richard Vivian Patrick et al,
Patent Services International Computers Limited
Cavendish Road
Stevenage Hertfordshire SG1 2DY(GB)

(54) Facsimile system.

(57) A facsimile system comprises facsimile apparatus (2) connected to a host processor system (1) in which operation of the facsimile apparatus (2) is controlled by the host processor system (1). The host processor system (1) is capable of carrying out date processing operations unrelated facsimile transmission and is also programmed to control interraction of the facsimile apparatus (2) with a distant station connected to the host processor by a telephone line (17). Transfer of image data between the telephone line (17) and the facsmile apparatus (2) is via the host processor system (1).

FACSIMILE SYSTEM

BACKGROUND TO THE INVENTION

This invention relates to facsimile systems.

In a facsimile system an image on a document at one location is transformed into an electronic signal and transmitted to another location where the image is reproduced. Facsimile apparatus normally contains both a scanner, to scan source document and output a signal representing the image on the document, and a reproducer to recreate on a fresh sheet the image corresponding to a received signal. In order to allow the apparatus to communicate over the telephone network it is necessary to provide both a modem to convert the signal to or from a form suitable for transmission over the network, and circuitry to control the communication between the two ends of the link. Originally such circuitry was formed by special-purpose hardware, but recently it has been proposed to employ a specially programmed microprocessor incorporated as part of the facsimile apparatus to perform these functions. This arrangement has the disadvantage that the facsimile apparatus is still relatively expensive and the system is relatively inflexible.

SUMMARY OF THE INVENTION

According to this invention there is provided a facsimile system comprising:

- a host processor system programmed or programmable to execute programs unrelated to facsimile communication on data entered by the user, the host processor system including means for coupling the host processor system to a telephone line for data transfer to and/or from the telephone line, and

- facsimile apparatus including a scanner and a reproducer,

- the facsimile apparatus being connected to the host processor by links, the host processor being arranged to control operation of the scanner and reproducer by signals sent over the said links, and image data being transferred to or from the facsimile apparatus over the said links, and

- the host processor system being programmed to control the interraction of the facsimile system with a distant facsimile station, to control operation of the facsimile apparatus to enable facsimile communication to occur, to transfer image data received from the facsimile apparatus onto the telephone line for transmission to the distant station and to transfer image data received over the telephone line from the distant station to the facsimile apparatus for reproduction by the reproducer.

The facsimile apparatus is therefore in effect a peripheral to the host processor system. Since control of its operation is exercised by the host processor system it can be very simple in construction and correspoindingly inexpensive. The host processor itself is capable of carrying out tasks unrelated to facsimile communication and is therefore more useful than a dedicated processor.

Preferably the facsimile apparatus is housed separately from the host processor system and is connected to it by cabling forming the said links.

According to a second aspect, the invention further provides facsimile apparatus comprising a scanner, a reproducer and means for coupling to links to a host processor system, the operation of both scanner and reproducer being controllable by signals received over the said links, and image data being transferred to or from the facsimile apparatus over the said links.

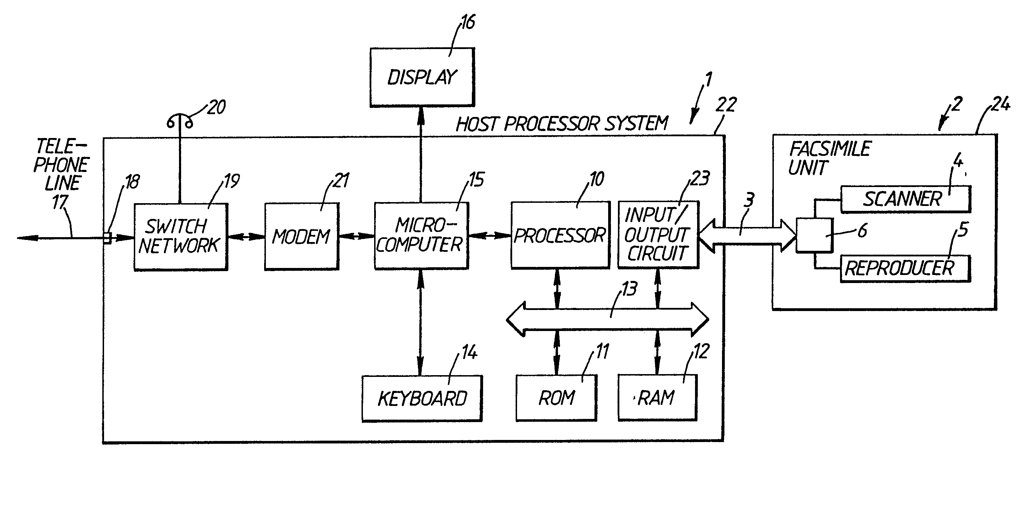

BRIEF DESCRIPTION OF THE DRAWING

An embodiment of the invention will now be described by way of example with reference to the accompany drawing, which is a block diagram, illustrating a facsimile system.

DESCRIPTION OF PREFERRED EMBODIMENT

Referring to the drawing, the system consists of a host processor system 1 connected to a facsimile unit 2 by cabling 3.

The facsimile unit 2 contains a scanner 4 and a reproducer 5. Each is conventional. Signals to control the operation of the scanner 4 and reproducer 5 are issued by a control circuit 6 which also receives image data from the scanner 4 when the scanner scans a document to be transmitted and supplies image data to the recorder when a document is to be reproduced.

The host processor system may for example be a personal computer and is especially suitable for use as an executive workstation. It contains a primary processor 10 which is controlled in the known manner by systems software, including an operating system and a language interpreter, and by applications programs. Fixed programs are held in a read-only memory (ROM) 11 and programs selected by the user on a particular occasion are held in a random-access memory (RAM) 12, which is also used for working storage. The ROM 11 and RAM 12 communicate with the processor 10 over a bus 13.

The user controls the host processor system 1 and can enter data for processing using a keyboard 14 which is scanned by a single-chip micro- computer 15. The microcomputer 15 passes codes corresponding to depressed keys to the primary processor 10, which reacts to them in accordance with its current program. As keys are depressed the corresponding character is displayed on a display 16, which is also controlled from the microcomputer 15. The display 16 is also capable of showing program output.

The application programs written by the user may be entered from the keyboard 14. As an alternative they may be loaded in the usual way from a storage peripheral such as a disc unit (not shown).

The host processor system is connected to a telephone line 17 through a telephone interface circuit 18, a switch network 19 to which a telephone handset 20 is connected, and a modem 21 connected to the microprocessor 15. The telephone handset 20 may be used as a conventional telephone with dialling carried out from the keyboard 14 or performed by the host 1 under program control. At other times the host 1 may use the telephone line 17 for data communication. It may for example communicate with a similar system in order to transmit or receive electronic mail; or it may receive data from a viewdata service.

The elements of the host processor system 1 so far described, with the exception of the display 16 and handset 20, are located in a common housing 22. The housing 22 also contains an input-output interface circuit 23 linked to the bus 13. This circuit is connected to one end of the cabling 3, the other end of which is connected to the control circuit 6 of the facsimile unit 2. The facsimile unit 2 is in its own housing 24.

The cabling 3 functions as a standard serial interface, for example as an RS 232-C interface.

The host 1 treats the facsimile unit 2 as a peripheral, both for controlling its operation and for exchanging data with it. If the user wishes to transmit a document by facsimile to a distant facsimile station he inserts the document in the scanner 4 and sets the host 1 into facsimile mode. The operating system may, for example, be organised to present a menu to the user that allows him to select the facsimile mode via the keyboard 14. The relevant routines of the operating system then assign function keys on the keyboard to act as control keys for facsimile operation. These routines then set up the call to the distant facsimile unit using a telephone number dialled by the user at the keyboard 14 or, possibly, already held by the system. When the link for facsimile transmission to the distant unit has been established the host 1 signals the facsimile unit 2 over the cabling 3 to start scanning and the scanner 4 is brought into operation. The scanned image data is passed line by line over the cabling 3 and written into the RAM 12. The processor 10 then processes the data to carry out any processing required, e.g. compression or image enhancement, and transmits it via the microcomputer 15 and modem 21 to the telephone line 17, over which it is transmitted to the distant facsimile station.

The host will respond to an incoming facsimile call to load the data into the RAM 12, decompress or otherwise process it if necessary, and transfer it over the cabling 3 to the facsimile unit 2. The reproducer 5 will then be controlled to print out the corresponding image.

The arrangement described, in which the host system 1 treats the facsimile unit as a peripheral, and all the intelligence needed to handle the facsimile communication is located in the host, allows an especially simple and inexpensive facsimile unit to be manufactured. The host system 1 itself is able to carry out other processing as desired by the user and is not restricted to processing connected with facsimile transmission. Indeed, the additional cost associated with introducing the facsimile capability can be very small.

The facsimile unit 2 may also be used as an input peripheral for inputting images scanned by the scanner 4 into the host, for example for image processing. It may also be used as an output peripheral for printing digitally derived data. It can thus serve as a hard-copy unit for the host system 1, which may therefore, if desired, dispense with a separate printer. In addition the facsimile unit 2 may be arranged to act as a photocopier by allowing a direct connection from the scanner 4 to the reproducer 5.

The host system 1 may add digitally derived data to the data defining a facsimile image for either transmission or printing.

8

## CLAIMS

1.   A facsimile system including facsimile apparatus incorporating a scanner, a reproducer and control apparatus arranged to control the operation of the scanner and the reproducer and to control the transfer of image data to and from a distant facsimile station characterised in that the control apparatus comprises a host processor system(1) programmable to execute programs unrelated to facsimile communications on data entered by a user and connected by links(3) to the facsimile apparatus(2), in that the host processor system(1) controls operation of the scanner(4) and reproducer(5) by signals sent over the links(3) and in that image data is transferred between the host processor system(1) and the facsimile apparatus(2) over the links(3).

2.   A facsimile system as claimed in claim 1 further characterised in that the facsimile apparatus(2) and the host processor system(1) are housed in separate housings (22,24) interconnected by cabling links(3).

3.   A facsimile system as claimed in claim 1 or 2 further characterised in that the host processor system(1) is programmed to control operation of the facsimile apparatus (2) to enable the reproducer(5) to receive image signals originating from the host processor system(1).

4.   Facsimile apparatus comprising a scanner and a reproducer characterised by the provision of links(3) to couple the scanner(4) and reproducer(5) to a host processor system(1), the links(3) being operative to pass control signals received from the host processor system(1) to the scanner(4) and reproducer(5) to control operation thereof and to transfer image data from the host processor system(1) to the reproducer(5) and from the scanner(4) to the host processor system(1).

5.   Facsimile apparatus as claimed in claim 4 further characterised in that the scanner(4) and reproducer(5) are operable in response to control signals received from the host processor system(1) to transfer image data directly from the scanner to the reproducer.

## DOCUMENTS CONSIDERED TO BE RELEVANT

EP 85302216.8

| Category | Citation of document with indication, where appropriate, of relevant passages | Relevant to claim | CLASSIFICATION OF THE APPLICATION (Int Cl 4) |
|---|---|---|---|
| X | US - A - 4 297 727 (OGAWA)<br>* Column 1, line 36 - column 2, line 16; fig. 2; column 5, line 3 - column 6, line 51; column 41, line 56 - column 42, line 11; claim 1 * | 1-5 | H 04 N 1/32<br>H 04 N 1/00 |
| X,P | DE - A1 - 3 341 418 (TOKYO)<br>* Fig. 1; page 5, line 35 - page 7, line 5; claim 1 * | 1-5 | |
| A | GB - A - 2 069 291 (EXXON)<br>* Fig. 1; abstract; page 1, line 121 - page 2, line 29 * | | |
| A | DE - A1 - 2 756 640 (RICOH)<br>* Page 6, line 5 - page 7, line 7; fig. 2; page 9, line 12 - page 13, line 9 * | | **TECHNICAL FIELDS SEARCHED (Int. Cl.4)**<br><br>H 04 N 1/00 |

The present search report has been drawn up for all claims

| Place of search | Date of completion of the search | Examiner |
|---|---|---|
| VIENNA | 24-06-1985 | DIMITROW |